**Europäisches Patentamt**

**European Patent Office**

**Office européen des brevets**

(19)

(11) Veröffentlichungsnummer: **0 111 088**
**B1**

# (12) EUROPÄISCHE PATENTSCHRIFT

(45) Veröffentlichungstag der Patentschrift:
14.01.87

(21) Anmeldenummer: **83109993.2**

(22) Anmeldetag: **06.10.83**

(51) Int. Cl.⁴: **H 02 M 7/155,** H 02 M 5/45

(54) Stromrichter.

(43) Veröffentlichungstag der Anmeldung:
**20.06.84 Patentblatt 84/25**

(45) Bekanntmachung des Hinweises auf die Patenterteilung:
**14.01.87 Patentblatt 87/3**

(84) Benannte Vertragsstaaten:
**AT BE CH DE FR GB IT LI NL SE**

(56) Entgegenhaltungen:
**EP-A-0 033 842**
**EP-A-0 081 133**
**DE-A-3 208 652**
**GB-A-2 076 233**
**US-A-3 909 698**
**US-A-4 096 557**

**"Elektrische Bahnen" 48/1977, S. 82-94**

(73) Patentinhaber: **BBC Aktiengesellschaft Brown, Boveri & Cie., Haselstrasse, CH- 5401 Baden (CH)**

(72) Erfinder: **Stemmler, Herbert, Dr., Ahornweg 15, CH- 5416 Kirchdorf (CH)**

## Beschreibung

Bei der Erfindung wird ausgegangen von einem Stromrichter in Brückenschaltung nach dem Oberbegriff des Patentanspruchs 1. Die Erfindung betrifft einen mehrere derartige Brückenschaltungen aufweisen den stromrichter und dessen Verwendung.

Mit dem Oberbegriff nimmt die Erfindung auf einen Stand der Technik Bezug, wie er aus der EP-AI 0 081 133 bekannt ist. Dort wird ein dreiphasiger Wechselstrommotor über einen Wechselrichter mit ausschaltbaren Thyristoren in den Brückenzweigen aus einer Gleichstromquelle gespeist. Die Wechselspannungsausgänge des Wechselrichters sind über Kondensatoren in Sternschaltung miteinander verbunden. Für die Thyristoren kommt eine Pulsbreitensteuerung zu Anwendung.

Beim Betrieb des Wechselrichters entstehen unerwünschte Stromoberschwingungen, die zu Wärmeverlusten im Motor und zu unerwünschten Rückwirkungen im speisenden Netz führen.

Die Erfindung, wie sie im Patentanspruch 1 definiert ist, löst die Aufgabe, die Stromrichtereigenschaften zu verbessern, insbesondere unerwünschte Rückwirkungen des Stromrichters auf das speisende Netz und eine anzuschliessende Last zu reduzieren.

Ein Vorteil der Erfindung besteht darin, dass diese Verbesserungen mit wenigen zusätzlichen Schaltelementen zu erreichen sind.

Unerwünschte Rückwirkungen des Stromrichters auf das speisende Stromnetz und auf eine anzuschliessende Last können reduziert werden, wenn mehrere Brückenschaltungen oder ganze Zwischenkreisumrichter parallelgeschaltet und mit einer vorgebbaren Phasenverschiebung der Impulse betrieben werden.

Beim Antrieb von Synchronmaschinen wird eine sanfte Anfahrt ermöglicht. Die Stromwärmeverluste in der Maschine werden durch eine bessere Glättung des Stromes und Vermeidung von Stromspitzen reduziert.

Zum einschlägigen Stand der Technik wird ferner auf die Schweizer Firmenzeitschrift Brown Boveri Mitteilungen 1982, S. 157 bis 162, insbesondere S. 159, verwiesen, aus der zwölfpulsige Stromrichterschaltungen mit je einem separaten Umrichter pro Maschinenteilwicklung eines Stromrichter-Synchronmotors als auch solche mit Einwicklungsmaschine und motorseitigem Dreiwicklungstransformator, zur Verwendung als Anfahrumrichter, bekannt sind. Dabei werden je zwei Umrichter mit Gleichstromzwischenkreis und einfache Thyristoren in den Srückenzweigen verwendet. Sie erfordern netzseitig Stromrichtertransformatoren mit zwei um 30° elektrisch versetzten Sekundärwicklungen. Maschinenseitig ist die Statorwicklung entweder mit zwei getrennten Gruppen auszuführen (Zweiwicklungsmaschinen), oder es ist bei Einwicklungsausführung des Motors auch auf der Maschinenseite ein Dreiwicklungstransformator einzusetzen.

Aus dem Taschenbuch Elektrotechnik, Band 5, VEB Verlag Technik, Berlin, 1980, S. 463 bis 469, ist ferner ein Stromrichter bekannt. Um im Anlaufbereich die Kommutierung des motorseitigen Wechselrichters zu gewährleisten, wird, gesteuert durch einen Taktgeber, der Strom im Gleichstrom zwischenkreis auf Null geregelt. Zur Unterstützung kann eine Glättungsdrossel über einen Freilaufthyristor kurzgeschlossen werden. Reversierbetrieb ist durch Umsteuern der Spannungsrichtung möglich. Das Stromrichterstellglied kann, je nach Beschaltung, spannungs- oder stromsteuerndes Verhalten aufweisen und als Brückenschaltung mit abschaltbaren Thyristoren in den Brückenzweigen ausgeführt sein. Zur Vermeidung von unzulässigen Ueberspannungen an den Halbleiterbauelementen des Stromrichterstellgliedes beim Abschalten induktiver Lasten sind schnellwirkende Ueberspannungsschutzmassnahmen erforderlich. Ein weiteres Problem ist die Belastung des speisenden Netzes mit Stromoberschwingungen, die beim Betrieb eines Stromrichters auftreten.

Schliesslich wird noch auf die DE-A 3 208 652 verwiesen, aus der ein Verfahren und eine Anordnung zur Steuerung eines impulsbreitenmodulierten Umrichters bekannt sind, bei welchem Verfahren zur Erzeugung der Thyristor-Zündimpulse eine Sägezahnspannung mit einer vorgegebenen sinusförmigen Spannung verglichen wird.

Die Erfindung wird nachstehend anhand von Ausführungsbeispielen näher erläutert. Es zeigen:

Fig. 1 einen Stromrichter in einphasiger Brückenschaltung, der in einer den Fig. 6 und 7 entsprechenden, erfindungsgemässen Schaltungsanordnung verwendet werden kann,

Fig. 2 (a) - (d) Spannung und Ströme am Eingang und Ausgang eines Stromrichters gemäss Fig. 1,

Fig. 3 ein Blockschaltbild für eine Ansteuerung eines Stromrichters gemäss Fig. 1,

Fig. 4 einen Zwischenkreisumrichter, der in einer der Fig. 6 entsprechenden, erfindungsgemässen Schaltungsanordnung verwendet werden kann und der einerseits an ein Wechselstromnetz und andererseits an die Rotorwicklungen einer Asynchronmaschine mit Schleifringläufer angeschlossen iat, wobei der Zwischenkreisumrichter eine Ueberspannungsschutzvorrichtung und abschaltbare Thyristoren in der maschinenseitigen Stromrichterbrücke aufweist,

Fig. 5 einen Zwischenkreisumrichter, der in einer der Fig. 6 entsprechenden erfindungsgemäßen Schaltungsanordnung verwendet werden kann der an die Feldwicklungen einer Synchronmaschine angeschlossen ist, mit abschaltbaren Thyristoren in der netz- und maschinenseitigen Stromrichterbrücke und einer Ueberspannungsschutzvorrichtung, die im Vergleich zu derjenigen von Fig. 4 eine andere Schaltung der Kondensatoren aufweist,

Fig. 6 zwei parallelgeschaltete und mit einer Phasendifferenz betriebene Zwischenkreisumrichter gemäss Fig. 5 mit nur einer Ueberspannungsschutzvorrichtung gemäss Fig. 4 und

Fig. 7 zwei parallelgeschaltete Stromrichterbrücken mit Drosseln im Stromkreis beider Gleichspannungsanschlüsse.

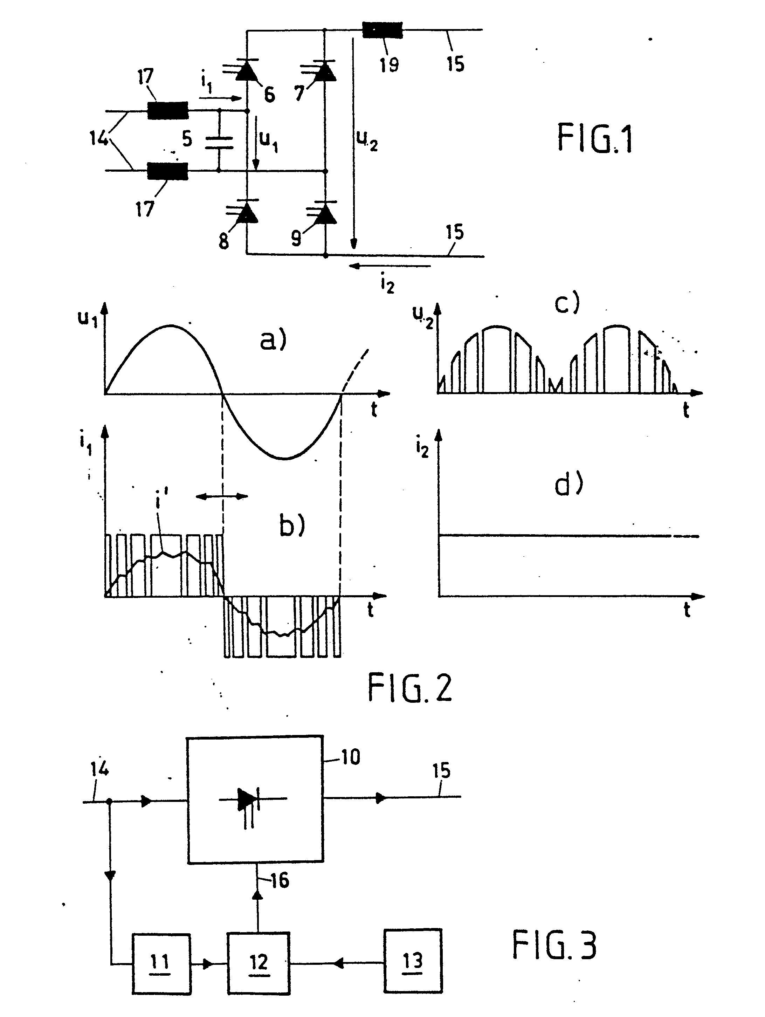

Fig. 1 zeigt einen Stromrichter, der über einen Wechselspannungseingang 14 mit einem nicht gezeigten Wechselspannungsnetz verbunden ist, das eine Eingangsspannung $u_1$ liefert, die im allgemeinen sinusförmig ist und mit der üblichen Netzfrequenz schwingt. Der Stromrichter gibt an einem Gleichspannungsausgang 15 einen gleichgerichteten Ausgangsstrom $i_2$ und eine pulsierende Ausgangsspannung $u_2$ ab, deren Mittelwert im Normalfall von Null verschieden ist und über die Ansteuerung des Stromrichters eingestellt werden kann. Ein- und Ausgang sind über eine Brücke aus steuerbaren Ventilen 6 ... 9 verbunden, die so angeordnet sind, dass sich für den Ausgangßstrom $i_2$ eine bevorzugte Richtung ergibt. Die Ventile 6 ... 9 werden in bekannter Weise in Paaren zusammengefasst, abwechselnd gezündet und gelöscht, wobei dem Wechselspannungsnetz ein annähernd rechteckförmiger Eingangsstrom $i_1$ wechselnder Polarität entnommen wird. Eine Induktivität 17 im Ausgangskreis der Brückenschaltung hält den Ausgangsstrom $i_2$ weitgehend konstant.

Als steuerbare Ventile werden abschaltbare Thyristoren verwendet, die symbolisch durch zwei Steuereingänge gekennzeichnet sind.

Parallel zum Eingang 14 ist ein Kondensator 5 geschaltet. Die abschaltbaren Ventile bzw. Abschaltthyristoren 6 ... 9, wie sie aus der Leistungselektronik als GTO (gate turn off)-Thyristoren bekannt sind, können zu einem beliebigen Zeitpunkt ein- und ausgeschaltet werden, wobei die Schaltfrequenz nach oben nur durch die charakteristischen Daten der Ventil-Bauelemente selbst begrenzt wird.

Der Vorteil, der sich aus dem Einsatz der abschaltbaren Ventile 6 ... 9 und dem parallelen Kondensator 5 ergibt, wird aus den Fig. 2 (a) bis 2 (d) dargestellten Zeitfunktionen der Ströme und Spannungen deutlich. Während die Eingangsspannung $u_1$ sinusförmig verläuft, wird der Eingangsstrom $i_1$ gemäss Fig. 2 (b) durch die im Zerhackerbetrieb arbeitenden, abschaltbaren Ventile 6 ... 9 in Strompulse zerlegt, deren Höhe konstant ist, deren Breite jedoch nach Massgabe des zeitlichen Verlaufs der Eingangsspannung $u_1$, also überwiegend sinusförmig, moduliert ist. Aus diesen breitenmodulierten Strompulsen ergibt sich im zeitlichen Mittel ein nahezu sinusförmiger Strommittelwert $i'$, dessen Oberschwingungsgehalt relativ klein ist und darüber hinaus mit zunehmender Zerhacker- oder Schaltfrequenz abnimmt.

Da auf der Eingangsseite innerhalb des Wechselspannungsnetzes stets interne Induktivitäten 17 vorhanden sind, werden beim Abschalten der Ventile 6... 9 während des Zerhackerbetriebs Spannungsspitzen erzeugt, die zu einer Schädigung der Ventile selbst oder anderer Schaltungskomponenten führen können. Aus diesem Grunde ist der Kondensator 5 vorgesehen, der zum Eingang 14 des Stromrichters Parallelgeschaltet ist und zur Unterstützung der Netzspannung beiträgt, so dass gefährliche Ueberspannungen sicher vermieden werden. Auch hier bringt eine möglichst hohe Zerhackerfrequenz einen Vorteil, weil der Aufwand für den Kondensator 5 mit steigender Frequenz geringer wird. Daher wird die Zerhackerfrequenz vorteilhafterweise grösser gewählt als die Frequenz der Eingangsspannung $u_1$.

Wie bereits erwähnt, sind auch auf der Ausgangsseite üblicherweise Induktivitäten 19 vorhanden, die einen gleichförmigen Ausgangsstrom $i_2$ gewährleisten. Um den Stromfluss während der im Zerhackerbetrieb auftretenden Schaltpausen zwischen den breitenmodulierten Stromimpulsen aufrechtzuerhalten, wird der Ausgangsstrom $i_2$ in diesem Zeitraum durch geeignete Ansteuerung der Ventile vorteilhafterweise über einen Freilaufzweig geführt. Wird also beispielsweise ein in positiver Richtung durch das Ventilpaar 6 und 9 fliessender Eingangsstrom $i_1$ durch ein abschaltendes Ventil 6 unterbrochen, so kann durch ein zündendes Ventil 7 über die dann leitenden Ventile 9 und 7 ein Freilaufzweig geschlossen werden, über den der von der ausgangsseitigen Induktivität 19 aufrechterhaltene Ausgangsstrom $i_2$ ungehindert weiterzufliessen vermag.

Die Ausgangsspannung $u_2$ besteht infolge des Zerhackerbetriebs der Ventile 6 ... 9 gemäss Fig. 2 (c) aus breitenmodulierten Spannungsimpulsen, deren jeweilige Amplituden allerdings nicht konstant sind. Es lassen sich, wie durch den Doppelpfeil in Fig. 2 (b) angedeutet, positive und negative Steuerwinkel realisieren, denen ein Nach- bzw.

Voreilen des Eingangsstromes $i_1$ gegenüber der Eingangsspannung $u_1$ und damit eine induktive bzw. kapazitive Komponente entspricht.

Die Steuerung eines Stromrichters gemäss Fig. 1 kann beispielsweise über eine Steuerschaltung erfolgen, wie sie in Fig. 3 in einem Blockschaltbild dargestellt ist. Ein Stromrichter 10 arbeitet zwischen dem Wechselspannungseingang 14 und dem Gleichspannungsausgang 15. Er ist über eine Steuerleitung 16 zur Uebermittlung der Steuerimpulse mit einem Pulsbreitenmodulator 12 verbunden, in dem die breitenmodulierten Steuerimpulse erzeugt werden. Der Pulsbreitenmodulator enthält in an sich bekannter Weise eine Komparatorschaltung, in der eine dreiecksförmige Spannung aus einem Sagezahngenerator 13 mit einer sinusformigen Spannung verglichen wird, die über einen Phasenschieber II aus der Eingangsspannung $u_1$ abgeleitet wird. Die Zerhacker- oder Schaltfrequenz, mit der die abschaltbaren Ventile 6... 9 betrieben werden, wird durch die Frequenz des Sägezahngenerators 13 bestimmt. Der Steuerwinkel, der über das Vorhandensein induktiver oder kapazitiver Komponenten im Strom entscheidet, wird mit Hilfe des Phasenschiebers 11 festgelegt, der eine Verschiebung der breitenmodulierten Impulsfolgen und damit des Strommittelwerts i' gegenüber der Eingangsspannung $u_1$ bewirkt. Schliesslich enthält der Pulsbreitenmodulator 12 noch eine Steuerlogik, durch die in den Schaltpausen des Zerhackerbetriebs der jeweils passende Freilaufzweig geschaltet wird.

Die Schaltungsanordnung, wie sie anhand der Fig. 1 für eine einphasige Brückenschaltung erläutert worden ist, lässt sich sinngemäss auf eine grosse Anzahl anderer Anwendungsfälle übertragen. So kann in einfacher Weise die einphasige Brückenschaltung zu einer dreiphasigen Brückenschaltung erweitert werden, die eingangsseitig an einem Drehstromnetz betrieben wird. Der Stromrichter kann auch als Wechselrichter eingesetz werden.

Insbesondere ist es interessant für die Anwendung, einen dreiphasigen Asynchron-Kurzschlussläufer-Motor anzuschliessen, um ihn frequenzvariabel anzutreiben. Bei Motorbetrieb fliesst dann die Energie von der Gleichstromseite über den Stromrichter auf die Wechselstromseite und damit in den Motor. Auf der Gleichstromseite, wird dann die Schaltung im allgemeinen in bekannter Weise durch einen gesteuerten Gleichrichter ergänzt, mit dem aus einem angeschlossenen Drehstromnetz eine steuerbare Gleichspannung für den Stromrichter gewonnen wird. Selbstverständlich kann dieser gesteuerte Gleichrichter wiederum ein Stromrichter gemäss Fig. 1, erweitert auf eine dreiphasige Brückenschaltung, sein.

Weiterhin kann eine solche Stromrichter-Schaltungsanordnung in einer dreiphasigen Brückenschaltung auch mit ihrer Wechselspannungseite rotorseitig an einen Asynchron-Schleifringläufermotor angeschlossen werden. Auch hier wird die Schaltung dann gleichspannungsseitig durch einen gesteuerten Gleichrichter in der genannten Art ergänzt. Die gesamte Anordnung bildet dann eine unter- oder übersynchrone Kaskade, mit der man die Asynchron-Schleifringläufermaschine in ihrer Drehzahl regeln und statorseitig jeden beliebigen Phasenwinkel (bzw. cos φ) einstellen kann.

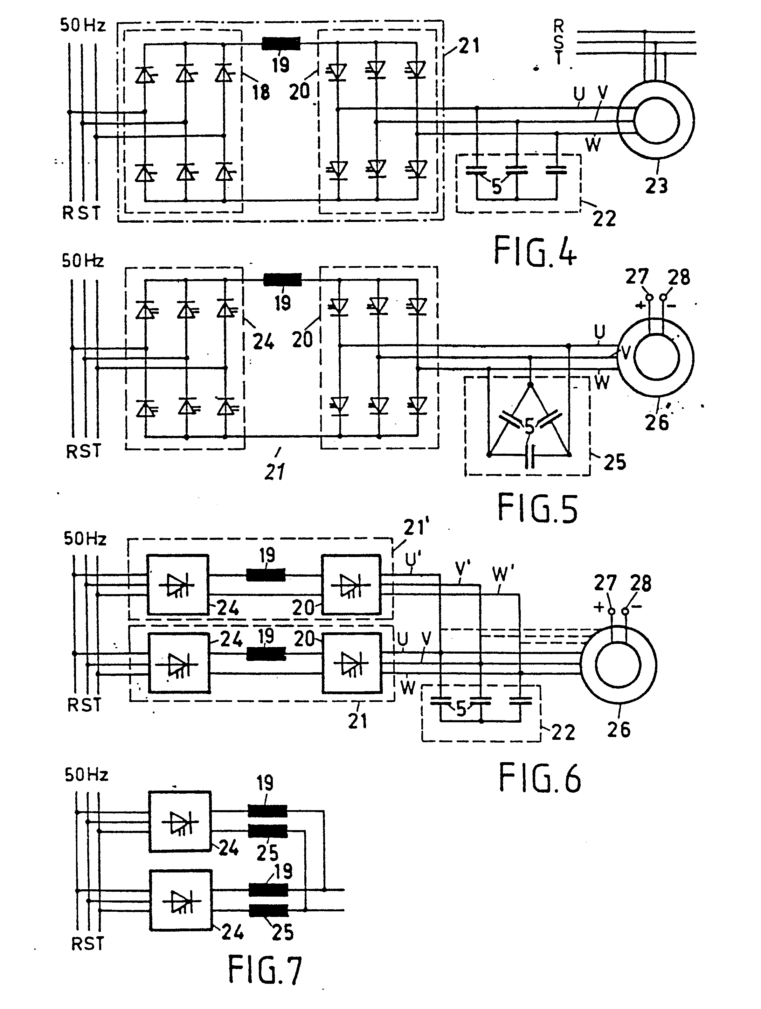

Bei der Ausführung gemäss Fig. 4 weist ein dreiphasiger Zwischenkreisumrichter 21 eine netzseitige Stromrichterbrücke 18 auf, deren Wechselspannungsanschlüsse an Netz-Phasenleiter R, S, T eines 50-Hz-Drehstromnetzes angeschlossen sind. Die Gleichspannungsanschlüsse der Stromrichterbrücke 18 sind einerseits (positiver Spannungsausgang) über eine Zwischenkreisdrossel 19 und andererseits (negativer Spannungsausgang) direkt mit Gleichspannungsanschlüssen einer maschinenseitigen Stromrichterbrücke 20 verbunden. Die netzseitige Stromrichterbrücke weist einfache Thyristoren in den Brückenzweigen auf, während in der maschinenseitigen Stromrichterbrücke 20 abschaltbare Thyriatoren eingesetzt sind. Die Wechselspannungsanschlüsse der maschinenseitigen Stromrichterbrücke sind über Maschinen-Phasenleiter U, V, W einerseits mit Schleifringen einer Asynchronmaschine 23 und andererseits mit drei Kondensatoren 5 einer Ueberspannungsschutzvorrichtung 22 verbunden. Bei den Kondensatoren 5 ist jeweils eine Seite mit einem Phasenleiter U oder V oder W verbunden, während die zweite Seite jeweils mit der zweiten Seite der anderen Kondensatoren in Verbindung steht. Die Feldwicklungen der Asynchronmaschine 23 sind am Netz-Phasenleiter R, S, T angeschlossen.

Bei der Ausführung gemäss Fig. 5 sind die Wechselspannungsanschlüsse der maschinenseitigen Stromrichterbrücke 20 eines dreiphasigen Zwischenkreisumrichters 21 über Phasenleiter U, V, W einerseits mit Feldwicklungen einer Synchronmaschine 26 und andererseits mit drei Kondensatoren 5 einer Ueberspannungsschutzvorrichtung 25 verbunden. Jeder Kondensator 5 ist direkt an zwei Maschinen-Phasenleiter U und V bzw. V und W bzw. W und U angeschlossen. Mit 27 und 28 sind Rotorwicklungsanschlüsse der Synchronmaschine 26 bezeichnet. Der Zwischenkreisumrichter 21 weist im Unterschied zu demjenigen von Fig. 4 eine netzseitige Stromrichterbrücke 24 mit abschaltbaren Thyristoren auf.

Die Kondensatoren der Ueberspannungsschutzvorrichtung 22 und 25 nehmen beim Abschalten der Thyristoren der maschinenseitigen Stromrichterbrücken 20 elektrische Energie auf, die in Rotor- bzw. Feldwicklungen der Wechselstrommaschinen gespeichert ist. Sie verhindern damit das Entstehen von Ueberspannungen, die insbesondere für die Thyristoren schädlich wären. Die zum Ueberspannungsschutz verwendeten Kondensatoren lassen sich relativ klein halten, wenn die abschaltbaren Thyristoren der Brückenschaltung, mit deren Wechselspannungsanschlüssen die Kondensatoren verbunden sind, mit relativ hoher Schaltfrequenz ein- und ausgeschaltet werden. Da der Strom durch an den Stromrichter angeschlossene induktive Lasten bei hoher Schaltfrequenz nur kurzzeitig unterbrochen ist, brauchen die Kondensatoren nur relativ wenig Energie von diesen induktiven Lasten aufzunehmen und zwischenzuspeichern. Betreibt man eine netzseitige Brückenschaltung mit hoher Schaltfrequenz, so ist die Ordnungszahl der erzeugten Oberschwingungen entsprechend gross und die Rückwirkung auf das speisende Netz entsprechend gering, da die Amplituden der Oberschwingungen proportional zu deren Ordnungszahl abnehmen.

Die Verwendung der netzseitigen Stromrichterbrücke 24 mit abschaltbaren Thyristoren ermöglicht gegenüber der Stromrichterbrücke 18 der Figur 4 eine höhere Schaltfrequenz, so dass unerwünschte Stromoberschwingungen mit niedriger Ordnungszahl vermieden werden können und die störenden Netzrückwirkungen reduziert sind. Ausserdem lässt sich der Phasenwinkel weitgehend frei in vier Quadranten einstellen, so dass dem Drehstromnetz Wirkleistung wahlweise zusätzlich mit induktiver oder kapazitiver Blindleistung entnommen werden kann.

Bei dem Ausführungsbeispiel der Erfindung gemäss Fig. 6 sind erfindungsgemäß zwei Zwischenkreisumrichter 21 und 21' gemäss Fig. 5, die mit einer vorgebbaren Phasendifferenz bezüglich der erzeugten Impulse betrieben werden, parallelgeschaltet. Die Wechselspannungsausgänge der maschinenseitigen Stromrichterbrücken 20 dieser Zwischenkreisumrichter 21 bzw. 21' sind über Maschinen-Phasenleiter U, V, W bzw. U', V', W' einerseits mit Feldwicklungen einer Synchronmaschine 26 und andererseits mit einer Ueberspannungsschutzvorrichtung 22 gemäss Fig. 4 verbunden.

Gestrichelt ist der Anschluss für eine Zweiwicklungsmaschine mit zwei Sekundärwicklungen angedeutet. Dabei sind die Maschinen-Phasenleiter U, V, W und U', V', W' nicht miteinander verbunden, sondern jeweils mit einer Ueberspannungsschutzvorrichtung 22 oder 25 gemäss Fig. 4 bzw. 5.

Diese Ausführung ermöglicht eine Erhöhung der Ordnungszahl von unerwünschten Oberschwingungen und somit eine weitere Reduzierung von störenden Rückwirkungen auf das Stromnetz und auf die Last.

Bei der Ausführungsform gemäss Fig. 7 sind zwei netzseitige Stromrichterbrücken 24, an deren positive und negative Gleichspannnungsausgänge je eine Zwischenkreisdrossel 19 und 25 angeschlossen ist, über diese Zwischenkreisdrosseln parallelgeschaltet. Dabei sind die Impulse der zwei Stromrichterbrücken 24 versetzt getaktet.

Damit lassen sich Rückwirkungen des Stromrichters auf das speisende Netz reduzieren. In der Regel entsteht dabei kein Mehraufwand an Thyristoren, da je Brückenzweig ohnehin mehrere Thyristoren erforderlich sind, die in Reihe oder parallelgeachaltet sind.

Auch bei Anordnung gemäss den Fig. 6 und 7 sind bei erfindungsgemässer Ausführung die netzseitigen Wechselspannungsanschlüsse der Stromrichterbrücken mit nicht dargestellten Kondensatoren von Ueberspannungsschutzvorrichtungen 22 oder 25 gemäss den Fig. 4 bzw. 5 verbunden.

**Patentansprüche**

1. Stromrichter
a) mit mindestens einer Brückenschaltung mit Wechselspannungsanschlüssen und mit Gleichspannungsanschlüssen,
b) welche Brückenschaltung abschaltbare Thyristoren in den Brückenzweigen aufweist, die im Sinne einer Impulsmodulation der Wechselstromhalbwellen gesteuert werden,
c) wobei jeder Wechselspannungsanschluss (14, U, U') der Brückenschaltung mit jedem anderen Wechselspannungsanschluss (14; V, W; V', W') dieser Brückenschaltung über mindestens einen Kondensator (5) in Wirkverbindung steht,
d) und wobei die Gleichspannungsanschlüsse über eine den Gleichstrom weitgehend konstant haltende Induktivität (19) geführt sind, dadurch gekennzeichnet,
e) dass mehrere Brückenschaltungen (20) vorgesehen sind, die bezüglich der erzeugten Impulse zueinander phasenverschoben angesteuert sind, und
f) dass diese Brückenschaltungen (20) wechselstromseitig phasenweise parallelgeschaltet sowie gleichstromseitig über mindestens je eine eigene Zwischenkreisdrossel (19, 25) eingespeist sind.

2. Stromrichter nach Anspruch 1, dadurch gekennzeichnet, dass die Brückenschaltungen (24, Fig. 7) gleichstromseitig über mindestens je eine Zwischenkreisdrossel (19, 25) zueinander parallelgeschaltet sind.

3. Stromrichter nach Anspruch 1 oder 2, dadurch gekennzeichnet,
a) dass jede der genannten Brückenschaltungen (20) mit ihren Gleichspannungsanschlüssen über mindestens je eine Zwischenkreisdrossel (19, 25) mit Gleichspannungsanschlüssen mindestens einer weiteren Brückenschaltung (18, 24) zu einem zwei Wechselstromnetze verbindenden Zwischenkreisumrichter (21, 21') verbunden ist,
b) dass die Wechselspannungsanschlüsse (U, V, W; U,, V', W') der ersten und/oder zweiten Brückenschaltungen mindestens zweier derartiger Zwischenkreisumrichter (21, 21') phasenweise miteinander verbunden sind und
c) dass mindestens zwei dieser Zwischenkreisumrichter jeweils zueinander phasenverschoben angesteuert sind.

4. Stromrichter nach einem der Ansprüche 1 bis 3, dadurch gekennzeichnet, dass die abschaltbaren Thyristoren jeweils über eine Steuerleitung mit einem Impulsbreitenmodulator (12) verbunden sind, welcher eingangsseitig einerseits mit einem Sägezahngenerator (13) und andererseits über einen Phasenschieber (11) mit einem Wechselspannungseingang (14) des Stromrichters (10) verbunden ist.

5. Verwendung eines Stromrichters nach einem der Ansprüche 1 bis 4 zum Anspeisen des Rotors einer Wechselstrommaschine (23).

6. Verwendung eines Stromrichters nach einem der Ansprüche 1 bis 4 zum Anspeisen des Stators einer Wechselstrommaschine (26).

## Claims

1. Static converter
a) comprising at least one bridge circuit having alternating-voltage connections and direct-voltage connections,
b) this bridge circuit being provided with gateturn-off thyristors in the bridge branches, which are gate controlled by means of a pulse modulation of the alternating-current halfwave,
c) each alternating-voltage connection (14, U, U') of the bridge circuit being effectively connected to each other alternating-current connection (14; V, W; V', W') of this bridge circuit via at least one capacitor (5),
d) and the direct-voltage connections being extended via an inductance (19) which keeps the direct current largely constant,
Characterized in
e) that several bridge circuits (20) are provided which are driven displaced in phase with respect to each other with respect to the pulses generated and
f) that these bridge circuits (20) are connected in parallel phase by phase on the alternating-current side and are fed in via at least one separate link choke (19, 25) each on the direct current side.

2. Static converter according to Claim 1, charcterized in that the bridge circuits (24, Figure 7) are connected in parallel with each other via at least one link choke (19, 25) each on the direct-current side.

3. Static converter according to Claim 1 or 2, characterized in
a) that each of the said bridge circuits (20) is connected with its direct-voltage connections via at least one link choke (19, 25) each to direct-voltage connections of at least one further bridge circuit (18, 24) to form a link frequency converter (21, 21') connecting two alternating-current systems
b) that the alternating-voltage connections (U, V, W; U,, V', W') of the first and/or second bridge circuits of at least two such link frequency converters (21, 21') are connected to each other phase by phase and
c) that at least two of these link frequency converters are in each case driven displaced in phase with respect to each other.

4. Converter according to one of Claims 1-3, characterized in that the gate-turn-off thyristors are in each case connected via a control line to a pulse width modulator (12) the input of which is connected, on the one hand to a sawtooth generator (13) and, on the other hand, via phase shifter (11) to an alternating-voltage input (14) of the static converter (10).

5. Use of a static converter according to one of Claims 1-4 for feeding the rotor of an alternating-current machine (23).

6. Use of a static converter according to one of Claims 1-4 for feeding the stator of an alternating-current machine (26).

## Revendications

1.- Redresseur de courant
a) comportant au moins un montage en pont avec des bornes de tension alternative et des bornes de tension continue,
b) ce montage en pont comportant des thyristors déclenchables dans les branches de pont qui sont commandés dans le sens d'une modulation d'impulsions des demi-alternances du courant alternatif,
c) chaque borne de tension alternative (14, U, U') du montage en pont étant chaque fois connectée activement à chaque autre borne de tension alternative (14; V, W; V ', W') de ce montage en pont par l'intermédiaire d'au moins un condensateur (5),
d) et les bornes de tension continue passant par une inductance (19) maintenant le courant continu en substance constant,
caractérisé en ce que,
e) plusieurs montages en pont (20) sont prévus et sont activés avec un déphasage réciproque par rapport aux impulsions produites, et
f) ces montages en pont (20) sont connectés en parallèle par phase du côté du courant alternatif et sont alimentés du côté du courant continu par l'intermédiaire chaque fois d'au moins une bobine de circuit intermédiaire propre (19, 25).

2.- Redresseur de courant suivant la revendication 1, caractérisé en ce que les montages en pont (24, Fig. 7) sont connectés en parallèle du côté du courant continu par l'intermédiaire chaque fois d'au moins une bobine de circuit intermédiaire (19, 25).

3.- Redresseur de courant suivant la revendication 1 ou 2, caractérisé en ce que,
a) chacun des dits montages en pont (20) est connecté par ses bornes de tension continue, par l'intermediaire chaque fois d'au moins une bobine de circuit intermédiaire (19, 25), à des bornes de tension continue d'au moins un autre montage en pont (18, 24) vers un redresseur de circuit intermédiaire (21, 21') connectant deux réseaux de courant alternatif,
b) les bornes de tension alternative (U, V, W; U', V', W') du premier et/ou du second montage en pont d'au moins deux redresseurs de circuits intermédiaires (21, 21') de ce genre sont interconnectées en phase, et
c) au moins deux de ces redresseurs de circuits intermédiaires sont chaque fois activés avec un certain déphasage réciproque.

4.- Redresseur de courant suivant l'une quelconque des revendications 1 à 3, caractérisé en ce que les thyristors déclenchables sont chaque fois connectés par l'intermédiaire d'une ligne de commande à un modulateur d'impulsions en durée (12) qui est connecté du côté d'entrée par un générateur de dents de scie (13) et, d'autre part, par l'intermédiaire d'un déphaseur (11) à une entrée de tension alternative (14) du redresseur de courant (10).

5.- Utilisation d'un redresseur de courant suivant l'une quelconque des revendications 1 à 4, pour alimenter le rotor d'une machine à courant alternatif (23).

6.- Utilisation d'un redresseur de courant suivant l'une quelconque des revendications 1 à 4, pour alimenter le stator d'une machine à courant alternatif (16).

FIG.1

FIG.2

FIG.3

1

FIG.4

FIG.5

FIG.6

FIG.7

3